# EUROPÄISCHE PATENTSCHRIFT

(11) **EP 1 323 967 B1**
(45) Veröffentlichungstag und Bekanntmachung des Hinweises auf die Patenterteilung: **17.11.2004**
(21) Anmeldenummer: 02027550.9
(22) Anmeldetag: 09.12.2002
(51) Int. Cl.: F16K 31/06

(54) **Elektromagnetisches Mehrwegeventil**
Electromagnetic multiway valve
Soupape électromagnétique à voies multiples

(30) Priorität: 19.12.2001 DE 10162525
(43) Veröffentlichungstag der Anmeldung: 02.07.2003
(73) Patentinhaber: Rexroth Mecman GmbH, 30453 Hannover (DE)
(72) Erfinder: Fortmann, Norbert, Dipl.-Ing., 30136 Hannover (DE); Liesenhoff, Thomas, Dipl.-Ing., 30159 Hannover (DE); Meyer, Ernst-August, Dipl.-Ing., 30974 Wenningsen (DE); Brandes, Wolfgang, Dipl.-Ing., 30419 Hannover (DE)
(74) Vertreter: Maiwald Patentanwalts GmbH

(56) Entgegenhaltungen:
- DE-A- 4 129 265
- DE-A- 4 232 518
- DE-C- 19 653 714
- US-A- 5 671 773

## Beschreibung

Die vorliegende Erfindung betrifft ein elektromagnetisches Mehrwegeventil mit mindestens einem in einem Ventilgehäuse untergebrachten Schaltelement zum Schalten eines Druckmittelflusses zwischen mehreren äußeren Druckmittelanschlüssen, wobei für eine elektromagnetische Betätigung des Schaltelements elektrische Spulenanschlüsse mindestens eines Elektromagneten vorgesehen sind.

Ein Mehrwegeventil gemäß dem Oberbegriff des Anspruchs 1 ist bereits in Dokument DE 196 53 714 offenbart.

Eine elektromagnetische Betätigung von Mehrwegeventilen hat sich in der Praxis wegen der einfachen elektrischen Zuführung der Ansteuersignale über eine Drahtleitung durchgesetzt. Mehrwegeventile können außerdem auch manuell mechanisch oder über einen Steuerdruck mittels einer Steuerdruckleitung betätigt werden. Bei den elektromagnetischen Mehrwegeventilen kann die Betätigung des Schaltelements zum Einen direkt über einen mit dem Schaltelement mechanisch gekoppelten bewegbaren Anker erfolgen; zum Anderen kann das Schaltelement auch über eine allgemein bekannte fluidische Vorsteuerung betätigt werden, wobei ein elektromagnetisches Pilotventil Beaufschlagung der Vorsteuerung mit dem Steuerdruck dient. Die vorliegende Erfindung ist bei beiden Ansteuerkonzepten eines elektromagnetischen Mehrwegeventils anwendbar.

Ein gattungsgemäßes elektromagnetisches Mehrwegeventil ist aus dem Produktkatalog "Know - how in Pneumatics" (Rexroth Mecman GmbH, Drucknummer 000 10 006 01, Ausgabe 1998, Seite 15.66) bekannt. Es besteht im Wesentlichen aus einem Ventilgehäuse, dessen innenliegendes Schaltelement über eine Vorsteuerung mittels am Ventilgehäuse angebrachter Pilotventile betätigt wird. Es sind hier mehrere elektromagnetische Mehrwegeventile zu einer Ventileinheit zusammengefasst. Die Druckmittelversorgung erfolgt über einen gemeinsamen Druckmittelverteiler, der von längsverlaufenden Druckmittelkanälen durchzogen ist. Von hieraus führen einzelne Querkanäle zu den Druckmittelanschlüssen an der Montagefläche jedes Mehrwegeventils.

Die elektrische Ansteuerung der Mehrwegeventile erfolgt von einer zentralen Steuereinheit aus über ein entsprechendes Signalkabel. Das Signalkabel kann sowohl eine Busleitung darstellen (Bus-Version) als auch im Sinne des Prinzips einer parallelen Verdrahtung einer Anzahl von Einzelleitungen umfassen, welche der Anzahl der anzusteuernden elektrischen Spulenanschlüsse entspricht (Version 32). Bei der Ansteuerung über eine Busleitung erfolgt zunächst in einer der Ventileinheit zugeordneten Busbox eine Decodierung des seriellen Ansteuersignals in entsprechende parallele Ansteuersignale für die Mehrwegeventile. Die Busbox beinhaltet weiterhin elektronische Treiberstufen, um das Ansteuersignal zu verstärken. Die über die elektronischen Treiberstufen verstärkten Ansteuersignale werden mittels einer entsprechenden Verdrahtung an die elektrischen Spulenanschlüsse der einzelnen Mehrwegeventile weitergeleitet. Somit erfolgt eine Übertragung der Ansteuersignale entlang des gesamten Signalweges über elektrische Leitungen. Zur Herstellung der einzelnen Leitungsabschnitte sind eine Vielzahl von Stecker - Buchsen - Verbindungen erforderlich. Insbesondere werden die elektrischen Spulenanschlüsse der Mehrwegeventile über jeweilige Steckerverbindungen hergestellt.

Es hat sich in der Praxis gezeigt, dass insbesondere diese elektrische Verbindung oftmals Kontaktprobleme verursacht. Nur über aufwendige Kapselmittel zum Schutz der Stecker - Buchsen - Verbindung kann dem Kontaktproblem bisher entgegengewirkt werden.

Es ist die Aufgabe der vorliegenden Erfindung die elektronische Ansteuerung eines elektromagnetischen Mehrwegeventils der vorstehend beschriebenen Art dahingehend weiterzuverbessern, dass eine zuverlässige elektrische Anbindung der Mehrwegeventile, insbesondere im Rahmen einer Ventileinheit, sichergestellt wird.

Die Aufgabe wird ausgehend von einem elektromagnetischen Mehrwegeventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die elektrischen Spulenanschlüsse eines elektromagnetischen Mehrwegeventils an eine ventilinterne Elektronikeinheit angeschlossen sind, die im Wesentlichen aus einem magnetfeldempfindlichen Sensor und einer nachgeschalteten Treiberstufe besteht, um über eine im Sensorbereich des magnetfeldempfindlichen Sensors liegende externe Datenstromleitung die Ansteuersignale kontaktlos zu übertragen.

Der Vorteil der erfindungsgemäßen Lösung liegt insbesondere darin, dass im sensiblen Kontaktbereich der elektrischen Spulenanschlüsse eine völlig kontaktlose Datenübertragung erfolgt. Lediglich die Versorgungsspannung für die Treiberstufe ist bereitzustellen. Dieses erfolgt jedoch losgelöst von der eigentlichen Datenübertragung, welche über die externe Datenstromleitung erfolgt. Das sich im Takt des Datenstroms ändernde Magnetfeld um die Datenstromleitung wird vom magnetfeldempfindlichen Sensor sensiert und über die nachfolgende Treiberstufe zur Ansteuerung der Spule entsprechend verstärkt. Somit kann das Mehrwegeventil mit einem elektrisch weitestgehend geschlossenen Gehäuse hergestellt werden; allein die elektrische Versorgungsspannung für die Treiberstufe ist zuzuleiten. Das elektromagnetische Mehrwegeventil ist ohne Steckerverbindung für die Ansteuersignale montierbar oder austauschbar.

Gemäß einer weiteren die Erfindung verbessernde Maßnahme ist die mit dem magnetfeldempfindlichen Sensor korrespondierende Datenstromleitung als ein Leiterzug einer Leiterplatte ausgebildet, um auf einfache Weise eine korrekte Leitungsführung zu gewährleisten. Alternativ hierzu ist es jedoch auch möglich, die Datenstromleitung als ein freiliegendes isoliertes oder nicht isoliertes Kabel auszubilden.

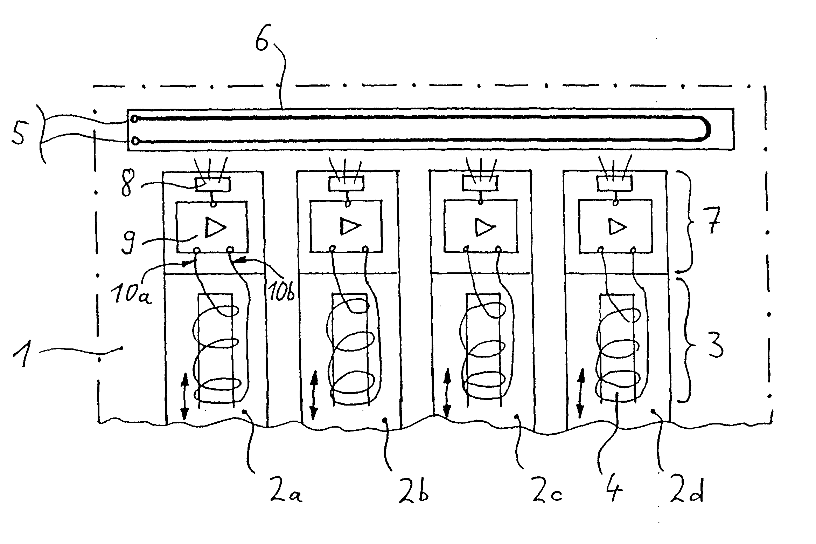

Als magnetfeldempfindlicher Sensor kommt vorzugsweise ein GMR - Sensor zum Einsatz. Dieser Sensor wird auch als Riesenmagnetowiderstand bezeichnet. Nach dem hierbei angewendeten Messprinzip erfolgt bei Annäherung eines Magnetfeldes eine entsprechende Änderung des elektrischen Widerstandes einer Mehrlagenschicht aus ferromagnetischen und nicht- ferromagnetischen, abgeschiedenen Schichten. Hierdurch wird eine vergleichsweise hohe Empfindlichkeit und ein sehr großer Messbereich für magnetische Felder erzielt, was insbesondere bei der hier vorgestellten Anwendung von Vorteil ist. Daneben können auch andere magnetfeldempfindliche Sensoren, die nach dem AMR - Effekt oder den HALL - Effekt arbeiten, verwendet werden, soweit diese den Anforderungen an die erforderliche hohe Empfindlichkeit und Schnelligkeit erfüllen.
Weitere die Erfindung verbessernde Maßnahmen werden nachfolgend gemeinsam mit der Beschreibung eines bevorzugten Ausführungsbeispiels der Erfindung anhand der Figuren näher dargestellt. Die einzige Figur zeigt eine Prinzipdarstellung einer Ventileinheit mit mehreren elektromagnetischen Mehrwegeventilen, bei der eine kontaktlose Übertragung der Ansteuersignale erfolgt.

Die Ventileinheit 1 besteht hier aus vier einzelnen elektromagnetischen Mehrwegeventilen 2a-2d, von denen lediglich der Bereich der elektromagnetischen Ventilbetätigung schematisch dargestellt ist.

Dieser umfasst je einen Elektromagneten 3, der das jeweilige Schaltelement 4 zur Ventilbetätigung axial verstellt. Die Ansteuersignale für die einzelnen Mehrwegeventile 2a-2d gelangen von einer Datenstromleitung 5 ausgehend an die Mehrwegeventile 2a-2d. Die Datenstromleitung 5 ist entlang der Mehrwegeventile 2a-2d als Leiterzug einer Leiterplatte 6 geführt. Die Leiterplatte 6 ist fest auf der Ventileinheit 1 montiert. Jedes Mehrwegeventil 2a-2d ist mit einer ventilinternen Elektronikeinheit 7 ausgestattet, welche einen mit der externen Datenstromleitung 5 zusammenwirkenden magnetfeldempfindlichen Sensor 8 sowie einer nachgeschalteten Treiberstufe 9 besteht. Der nach Art eines GMR - Sensors ausgebildete magnetfeldempfindliche Sensor 8 detektiert das sich im Takt des Datenstroms ändernde Magnetfeld um die Datenstromleitung 5 und gibt ein dementsprechendes Ansteuersignal an die Treiberstufe 9 weiter.

Die Treiberstufe 9 dekodiert das empfangene Ansteuersignal und verstärkt ein gültiges Ansteuersignal zur Bestromung der elektrischen Spulenanschlüsse 10a, 10b des Elektromagneten 3 zur elektromagnetischen Betätigung des Schaltelements 4.

Die vorliegende Erfindung ist nicht beschränkt auf das vorstehend beschriebene bevorzugte Ausführungsbeispiel. So ist es auch denkbar, dass die externe Datenstromleitung als ein freiliegendes isoliertes oder nicht - isoliertes Kabel ausgebildet ist. Ferner ist die erfindungsgemäße kontaktlose Übertragung der Ansteuersignale nicht allein bei Ventileinheiten, sondern auch bei einzelnen Ventilen unterschiedlichster Bauart prinzipiell anwendbar.

### Bezugszeichenliste

- **1**: Ventileinheit
- **2**: Mehrwegeventil
- **3**: Elektromagnet
- **4**: Schaltelement
- **5**: Datenstromleitung
- **6**: Leiterplatte
- **7**: Elektronikeinheit
- **8**: magnetfeldempfindlicher Sensor
- **9**: Treiberstufe
- **10**: elektrischer Spulenanschluss

## Patentansprüche

1. Elektromagnetisches Mehrwegeventil mit mindestens einem in einem Ventilgehäuse untergebrachten Schaltelement (4) zum Schalten eines Druckmittelflusses zwischen mehreren äußeren Druckmittelanschlüssen, wobei für eine elektromagnetische Betätigung des Schaltelements (4) elektrische Spulenanschlüsse (10a, 10b) mindestens eines Elektromagneten vorgesehen sind,
**dadurch gekennzeichnet, dass** die elektrischen Spulenanschlüsse (10a, 10b) an eine ventilinterne Elektronikeinheit (7) angeschlossen sind, die im wesentlichen aus einem magnetfeldempfindlichen Sensor (8) und einer nachgeschalteten Treiberstufe (9) besteht, um über eine im Sensorbereich des magnetfeldempfindlichen Sensors (8) liegende externe Datenstromleitung (5) die Ansteuersignale kontaktlos zu übertragen.

2. Elektromagnetisches Mehrwegeventil nach Anspruch 1,
**dadurch gekennzeichnet, dass** die mit dem magnetfeldempfindlichen Sensor (8) zusammenwirkende Datenstromleitung (5) als ein Leiterzug auf einer Leiterplatte (6) ausgebildet ist.

3. Elektromagnetisches Mehrwegeventil nach Anspruch 1,
**dadurch gekennzeichnet, dass** die mit dem magnetfeldempfindlichen Sensor (8) zusammenwirkende Datenstromleitung (5) als ein freiliegendes isoliertes oder nicht-isoliertes Kabel ausgebildet ist.

4. Elektromagnetisches Mehrwegeventil nach Anspruch 1,
**dadurch gekennzeichnet, dass** der magnetfeldempfindlichen Sensor (8) nach Art eines GMR-Sensors ausgebildet ist.

5. Elektromagnetisches Mehrwegeventil nach Anspruch 1,
**dadurch gekennzeichnet, dass** die elektromagnetische Betätigung des Schaltelements (4) über mindestens ein elektromagnetisches Pilotventil erfolgt, das den Steuerdruck eines vorgesteuerten Mehrwegeventils schaltet.

6. Elektromagnetisches Mehrwegeventil nach Anspruch 1,
**dadurch gekennzeichnet, dass** die elektromagnetische Betätigung des Schaltelements (4) über mindestens einen Elektromagneten erfolgt, dessen bewegbarer Anker mit dem Schaltelement mechanisch gekoppelt ist.

7. Ventileinheit mit mehreren aneinandergereihten Mehrwegeventilen gemäß einem der vorstehenden Ansprüche.

8. Ventileinheit nach Anspruch 7,
**dadurch gekennzeichnet, dass** die Datenstromleitung (5) auf einem Druckmittelverteiler für die Mehrwegeventile (2a bis 2d) montiert ist.

## Claims

1. An electromagnetic multiport valve having at least one switching member (4) accommodated in a valve housing for switching a pressure medium flow between a plurality of external pressure-medium ports, wherein, for electromagnetic operation of the switching member (4), electrical winding terminals (10a, 10b) of at least one electromagnet are provided,
**characterized in that** the electrical winding terminals (10a, 10b) are coupled to an electronics unit (7), internal to the valve, essentially consisting of a magnetic-field sensitive sensor (8) and a post-connected driver (9) in order to achieve a non-contacting transmission of the driving signals via an external electric data line (5) extending in the sensor range of the magnetic-field sensitive sensor (8).

2. The electromagnetic multiport valve according to claim 1,
**characterized in that** the electric data line (5) interacting with the magnetic-field sensitive sensor (8) is formed as a conductor path on a printed circuit board (6).

3. The electromagnetic multiport valve according to claim 1,
**characterized in that** the electric data line (5) interacting with the magnetic-field sensitive sensor (8) is formed as an exposed insulated or uninsulated cable.

4. The electromagnetic multiport valve according to claim 1,
**characterized in that** the magnetic-field sensitive sensor (8) is configured as a GMR type sensor.

5. The electromagnetic multiport valve according to claim 1,
**characterized in that** the electromagnetic operation of the switching member (4) is carried out via at least one electromagnetic pilot valve which switches the control pressure of a pilot-operated multiport valve.

6. The electromagnetic multiport valve according to claim 1,
**characterized in that** the electromagnetic operation of the switching member (4) is carried out via at least one electromagnet having its moveable armature mechanically coupled with the switching member.

7. A valve unit having a plurality of series-arranged multiport valves according to any one of the preceding claims.

8. The valve unit according to claim 7,
**characterized in that** the electric data line (5) is mounted on a pressure medium manifold for the multiport valves (2a to 2d).

## Revendications

1. Soupape électromagnétique à plusieurs voies, comprenant un élément de commutation (4) logé dans un boîtier de soupape et destiné à commuter l'écoulement d'un agent sous pression entre plusieurs raccords extérieurs pour l'agent sous pression, dans laquelle il est prévu des raccords de bobinage électrique (10a, 10b) pour au moins un électroaimant en vue d'un actionnement électromagnétique de l'élément de commutation (4),
**caractérisée en ce que** les raccords de bobinage électrique (10a, 10b) sont raccordés à une unité électronique (7) interne à la soupape, qui comprend essentiellement un capteur (8) sensible au champ magnétique et un circuit pilote (9) branché derrière celui-ci, pour transmettre sans contact les signaux de pilotage via une ligne de données (5) externe posée dans la zone de détection du capteur (8) sensible au champ magnétique.

2. Soupape électromagnétique à plusieurs voies selon la revendication 1, **caractérisée en ce que** la ligne de données (5) qui coopère avec le capteur (8) sensible au champ magnétique est réalisée sous la forme d'une piste conductrice sur une plaque à circuits imprimés (6).

3. Soupape électromagnétique à plusieurs voies selon la revendication 1, **caractérisée en ce que** la ligne de données (5) qui coopère avec le capteur (8) sensible au champ magnétique est réalisée sous la forme d'un câble disposé librement, isolé ou non isolé.

4. Soupape électromagnétique à plusieurs voies selon la revendication 1, **caractérisée en ce que** le capteur (8) sensible au champ magnétique est réalisé sous la forme d'un capteur GMR.

5. Soupape électromagnétique à plusieurs voies selon la revendication 1, **caractérisée en ce que** l'actionnement électromagnétique de l'élément de commutation (4) a lieu via au moins une valve pilote électromagnétique, qui régit la pression de commande d'une soupape à plusieurs voies à commande préalable.

6. Soupape électromagnétique à plusieurs voies selon la revendication 1, **caractérisée en ce que** l'actionnement électromagnétique de l'élément de commutation (4) a lieu via au moins un électroaimant dont l'armature mobile est couplée mécaniquement à l'élément de commutation.

7. Groupe de soupapes comprenant plusieurs soupapes à plusieurs voies selon l'une des revendications précédentes, agencées en rangée.

8. Groupe de soupapes selon la revendication 7, **caractérisée en ce que** la ligne de données (5) est montée sur un répartiteur d'agent sous pression pour les soupapes à plusieurs voies (2a à 2d).
